# EUROPÄISCHE PATENTSCHRIFT

(11) **EP 1 569 012 B1**
(45) Veröffentlichungstag und Bekanntmachung des Hinweises auf die Patenterteilung: **06.05.2015**
(21) Anmeldenummer: 05001537.9
(22) Anmeldetag: 26.01.2005
(51) Int. Cl.: G01T 1/20, G01T 1/208

(54) **Verfahren zum Nachweis ionisierender Strahlung**
Method for the detection of ionizing radiation
Procédé pour la détection de rayonnement ionisant

(30) Priorität: 25.02.2004 DE 102004009104
(43) Veröffentlichungstag der Anmeldung: 31.08.2005
(73) Patentinhaber: Berthold Technologies GmbH & Co. KG, 75323 Bad Wildbad (DE)
(72) Erfinder: Berthold, Fritz, Dr., 75173 Pforzheim (DE); Reuter, Wilfried, Dr., 75334 Straubenhardt (DE); Haefner, Peter, 75305 Neuenbürg (DE)
(74) Vertreter: Schön, Thilo

(56) Entgegenhaltungen:
- EP-A- 1 074 856
- US-A- 4 107 534
- US-A- 4 476 388
- US-A- 5 796 108
- IIDA T ET AL: "A LOW-ENERGY BETA-PARTICLE IMAGING SYSTEM FOR MEASURING TRITIUM DISTRIBUTIONS" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. 253, Nr. 1, 15. Dezember 1986 (1986-12-15), Seiten 119-127, XP000048099 ISSN: 0168-9002
- DATABASE WPI Section Ch, Week 198413 Derwent Publications Ltd., London, GB; Class A97, AN 1984-079753 XP002331051 -& SU 397 073 A (RADYVANYUK A M) 30. Oktober 1983 (1983-10-30)
- GLENN F. KNOLL: "Radiation detection and measurement" 1989, JOHN WILEY & SONS , XP002331050 * Seite 231; Tabellen 8-3 * * Seite 237, Absatz 3 *

## Beschreibung

### Technischer Hintergrund

Die Erfindung bezieht sich auf ein Verfahren zur Szintillationszählung von ionisierender Strahlung.

In Radionuklidlaboren, in kerntechnischen Anlagen oder im allgemeinen Strahlenschutz werden regelmäßig Messungen z.B. zur Ermittlung von radioaktiven Kontaminationen oder der Dosisleistung sowie zur Aktivitätsmessung durchgeführt.

Auch in der Prozessmesstechnik, etwa zur Messung des Füllstandes, der Dichte oder des Flächengewichtes sind nukleare Messverfahren weit verbreitet. Als Detektoren werden vor allem Szintillationszähler, Zählrohre und lonisationskammern verwendet.

### Stand der Technik

Aus KNOLL "Radiation detection and measurement", 2^{nd} edition (S.231 und 237 S) ist zu entnehmen, dass ZnS das Material der Wahl für den Nachweis von Alpha-Strahlung ist und hierfür eine hohe Lichtausbeute aufweist. Dagegen ist ZnS zum Nachweis anderer Strahlungsarten offenbar nicht geeignet.

Daher ist der bereits in der US-5,796,108 beschriebene Stand der Technik folgender:
Wird nur Alpha-Strahlung gemessen, so wird nur ZnS als Szintillator verwendet. Wird nur Beta-Strahlung gemessen, so wird ein Plastikszintillator verwendet Soll jedoch Alpha- und Betastrahlung gleichzeitig und getrennt gemessen werden, so wird ein "Sandwich"-Szintillator benutzt. Dieser besteht aus einem flachen Plastikszintillator mit einer darauf aufgebrachten Schicht von ZnS, letztere der Probe zugewandt. Die Dicke der ZnS-Schicht wird so gewählt, dass möglichst alle Alpha-Teilchen gestoppt werden und dabei Licht erzeugen, was bei etwa 6 mg/cm² Schichtdicke erreicht wird. In jeder Ausführungsform befindet sich über dem Szintillator ein lichtdichtes Strahlen-Eintrittsfenster, meist eine metallbedampfte Kunststofffolie.

Der Szintillator kann direkt auf dem Eintrittsfenster des Photovervielfachers montiert sein. Dies ist allerdings bei Oberftächen-Kontaminatiönsmonitoren nicht möglich, da die Szintillatoren Flächen von typisch 100-200 cm² aufweisen, wogegen die Eintrittsfenster vorzugsweise verwendeter Photovervielfacher nur etwa 25 mm Durchmesser haben. Daher werden hier die Photonen aus dem Szintillator mit Hilfe eines Reflektors auf die Photokathode gebündelt.

Die Ausgangsimpulse des Photovervielfachers durchlaufen einen Linearverstärker mit Impulsformungszeiten von typisch 1-20 µs. Die Unterscheidung von Alpha-Strahlung einerseits, Beta/Gamma/Röntgenstrahlung andererseits erfolgt beim bekannten Verfahren mit Sandwich-Szintillatoren an Hand der Amplituden, die durch Impulshöhen-Diskriminatoren in die entsprechenden Kanäle sortiert werden.

Dieses Verfahren hat eine Reihe von Nachteilen:
Die Empfindlichkeit ist für niederenergetische Beta-Strahlung gering, da diese zunächst die ZnS-Schicht durchdringen müssen und dort kein mit herkömmlichen Methoden messbares Signal erzeugen, bevor sie mit ihrer Restenergie den Plastikszintillator erreichen. Man erhält in diesem Falle auch kein erkennbares Plateau mehr, d.h. keinen stabilen Arbeitspunkt in der Abhängigkeit der Impulsrate als Funktion der Hochspannung.

Plastikszintillatoren mit ZnS-Beschichtung erfordern außerdem einen speziellen und komplexen Herstellungsprozess und damit hohe Kosten für den Detektor und damit das Messsystem.

In der US 4,476,388 wird ein Verfahren vorgeschlagen, welches mit zwei Szintillatoren und mit zwei Photovervielfachern arbeitet.

Die EP 1 074 856 A2 beschreibt ein Verfahren, welches einen Szintillator mit einer multiplen Szintillationscharakteristik verwendet.

### Darstellung der Erfindung

Aufgabe der Erfindung ist die Konzeption eines Messsystems mit geringen Herstellungskosten des Detektors, mit dem Ziel einer Erhöhung der Sensitivität des Messsystems insbesondere bei kleinen Betaenergien, bei nur geringen Sensitivitätsänderungen in einem großen Temperaturbereich von -20 bis + 50 Grad C, sowie mit guter Langzeitstabilität.

Diese Aufgabe wird gemäß den Merkmalen des Patentanspruchs 1 gelöst.

Überraschender Weise erlaubt die Kombination eines einzigen Szintillators, der Abklingzeitkomponenten von über 100 ns erhält und somit eine zeitliche Auflösung der Einzelphotonenimpulse ermöglicht, mit einem Einzelphotonenzähler die Messung sämtlicher Strahlungsarten wie Alpha-, Beta-, Gamma- und Röntgenstrahlung. Als Einzelphotonenzähler (photon counter) bezeichnet man einen Detektor für Photonen, vorzugsweise im sichtbaren Bereich oder im nahen Ultraviolett oder Infrarot. Er besteht aus einem schnellen Photovervielfacher mit hoher innerer Verstärkung, die u.A. mit einer hohen Zahl von Dynoden (z. B. 10) erreicht wird, einer stabilisierten Hochspannungsversorgung und einem schnellen Verstärker/Diskriminator mit Normimpulsausgang. Ein Einzelphotonenzähler kann anstelle eines Photovervielfachers auch ein Halbleiterbauelement mit innerer Verstärkung, z.B. eine Avalanche Photodiode, verwenden.

Durch die dem Einzelphotonenzähler nachgeschalteten Auswerteschaltungen können die einzelnen Strahlungsarten voneinander unterschieden und damit getrennt und gleichzeitig oder auch einzeln oder gemeinsam gemessen werden.

Die Einzelphotonenmessung wird mit einem weiteren Verfahren kombiniert, nämlich derart, dass die Einzelphotonenmessung für die Messung von Beta- und Gamma-Strahlung benutzt wird, dagegen wird Alpha-Strahlung in konventioneller Weise mit einer langsamen Verstärker-Diskriminatorschaltung gemessen.

Ein Szintillator mit obigen Eigenschaften kann relativ leicht entweder durch Sedimentation mit einer geeigneten Lösung oder durch Auftragen mit einer Spritzpistole hergestellt werden, was die Herstellkosten des Detektors und damit des Messsystems entscheidend reduziert.

Vorteilhafte Ausgestaltungen der technischen Lehre des Patentanspruchs 1 betreffen hauptsächlich die Auswerteschaltung. Durch geeignete Ausgestaltungen der Auswerteschaltung ausschließlich zur Grundauswertung im Rahmen der Einzelphotonenmessung oder durch zusätzliche Schaltungsbestandteile lässt sich das erfindungsgemäße Messsystem für Messungen im Rahmen einer Vielzahl von Anwendungsbereichen auslegen; so sind insbesondere Einzelmessungen einer vorgegebenen Strahlungsart, aber auch gleichzeitige Messungen mehrerer Strahlungsarten, etwa für den Einsatz im Strahlenschutz, bei radiometrischen Messverfahren, oder für die Verwendung in der Dosimetrie, realisierbar.

Durch die erfindungsgemäße Korrelationsschaltung in der nachfolgenden Auswerteschaltung werden diese Ausgangsimpulse analysiert, um damit ein gutes Signalrauschverhältnis zu erhalten, oder um verschiedene Strahlungsarten voneinander zu trennen.

Eine solche Korrelationsschaltung erkennt aus der zeitlichen Abfolge der Norm-Impulse des Einzelphotonenzählers typische, aus der Wechselwirkung der ionisierenden Strahlung mit dem Szintillator stammende Abfolgen, durch die sich sowohl die unvermeidlichen Rauschimpulse von den interessierenden ionisierenden Strahlungsereignissen trennen lassen, als auch die ionisierende Strahlung ihrer Art nach (Alphastrahlung einerseits und Beta/Gamma/Röntgenstrahlung andererseits) identifizieren lässt. Eine hierfür ausgelegte Korrelationsschaltung ist derart konzipiert, dass ein Impuls des Einzelphotonänzählers ein Gate für eine vorgebbare Gatedauer öffnet, innerhalb der eventuell weitere Impulse gezählt werden. Abhängig von der Anzahl N dieser weiteren Impulse und der Gatedauer kann durch Vergleich mit einem für eine Strahlungsart vorgebbaren typischen Wert eine Entscheidung getroffen werden, ob die während der Gatedauer eingetroffenen Impulse Folge eines ionisierenden Strahlungsereignisses dieser Art sind.

Eine Fortentwicklung einer solchen Korrelationsschaltung erlaubt durch die Vorgabe von zwei typischen Werten für die ionisierenden Strahlungsereignisse dann auch eine Unterscheidung dieser Strahlungsarten auf der Basis der Anzahl N der während des Gatefensters eingetroffenen Impulse.

Diese Art der Korrelationsmessung der Ausgangsimpulse des Einzelphotonenzählers wird im folgenden kurz als "Bursterkennung" bezeichnet.

Bei der Bursterkennung können Einzelphotonenereignisse auf Grund der thermischen Elektronenemission aus der Photokathode wegen ihrer statistischen Verteilung nur über zufällige Koinzidenzen beitragen. Deshalb kann im Bereich des Nulleffektes dieser Beitrag zur Zählrate vernachlässigt werden, auch wenn bei höheren Temperaturen die thermische Elektronenemission ansteigt.

Da der Arbeitspunkt, d.h. die Hochspannung des Photovervielfachers, so gewählt wird, dass man sich im Einzelphotonen-Plateau befindet, erhält man auch für die Burstimpulsrate unabhängig von der Energie der ionisierenden Strahlung ein gutes Plateau.

Durch die dem Einzelphotonenzähler nachfolgende Bursterkennung ist sowohl eine Einzelmessung (Vorgabe des typischen N-Werts der nachzuweisenden Strahlung), als auch eine gleichzeitige oder parallele Messung mehrerer Arten von Strahlungen möglich, in dem aus der Anzahl der im Gatefenster gezählten Impulse auf die Art des nachgewiesenen Strahlungsereignisses geschlossen wird.

Erfindungsgemäß ist ein separater Kanal vorgesehen, der zum Nachweis von Alphateilchen nach der bekannten Methode mit einem ladungsempfindlichen Vorverstärker mit einer nachfolgenden Pulsformung von ca. 1 µs und einem Integraldiskriminator arbeitet, und der im folgenden kurz als "Alphakanal" bezeichnet wird.

Mit einem solchen Alphakanal sind voneinander zeitlich unabhängige Zählungen möglich; sollten während der Messung von ionisierenden Ereignissen durch die Bursterkennung gleichzeitig im Alphakanal Alphaimpulse oder Impulse aus der Höhenstrahlung registriert werden, welche auf Grund der sehr intensiven Wechselwirkung mit dem Szintillator große Lichtblitze und unerwünschtes Nachleuchten (Phosphoreszenz) und damit Einzelphotonensignale erzeugen, auf die auch die Bursterkennung anspricht, so wird über ein vom Alphakanal erzeugtes Vetosignal die Bursterkennung deaktiviert, um Artefakte einschließlich der Störimpulse aus dem Nachleuchten des Szintillators zu vermeiden.

Weitere vorteilhafte Ausgestaltungen sind weiteren Unteransprüchen zu entnehmen.

### Kurze Beschreibung der Zeichnungen

Ausführungsbeispiele von Vorrichtungen zur Durchführung des erfindungsgemäßen Verfahrens werden im folgenden anhand von Zeichnungen erläutert, es zeigen:
- Fig.1:: Ein Blockschaltbild einer Anordnung zur Durchführung eines Verfahrens zum Nachweis ionisierender Strahlung,
- Figur 2A-C:: die bei der Anordnung gemäß Figur 1 gemessenen Zählraten und deren Amplituden,
- Figur 3:: ein Blockschaltbild einer Anordnung zur Messung eines Strahlungstyps mittels Bursterkennung,
- Figur 4:: ein erstes Blockschaltbild einer Anordnung zur Unterscheidung von Strahlungsarten mittels Bursterkennung,
- Figur 5:: ein zweites Blockschaltbild einer Anordnung zur Unterscheidung von Strahlungsarten mittels Bursterkennung und AlphaKanal,
- Figur 6:: eine Darstellung einer ersten Ausführung des Detektors,
- Figur 7:: eine Darstellung einer zweiten Ausführung des Detektors,
- Figur 8:: eine Darstellung einer dritten Ausführung des Detektors,
- Figur 9:: eine Darstellung einer vierten Ausführung des Detektors,
- Figur 10:: eine Darstellung einer fünften Ausführung des Detektors, und
- Figur 11:: eine Darstellung einer sechsten Ausführung des Detektors.

### Beschreibung der Ausführungsbeispiele

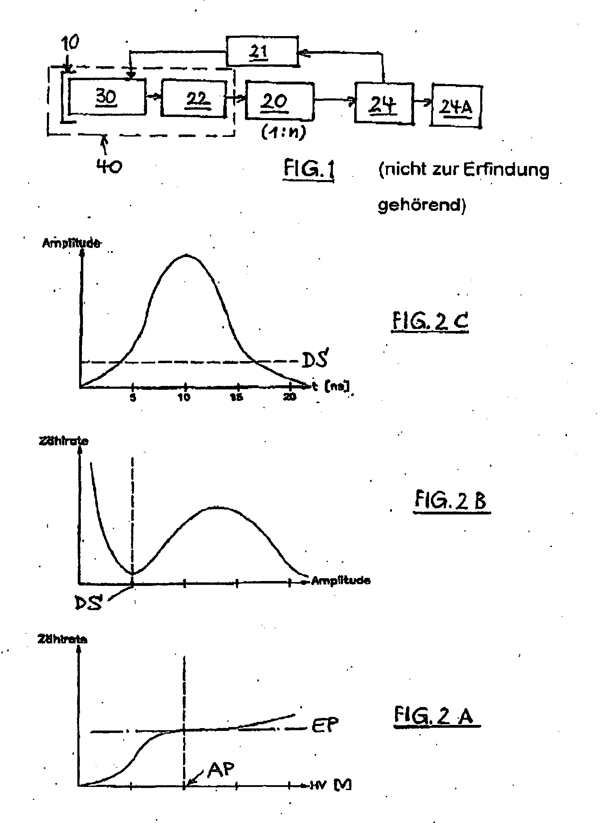

Figur 1 zeigt eine Anordnung zur Durchführung eines Nachweisverfahrens in seiner grundsätzlichen Ausgestaltung.

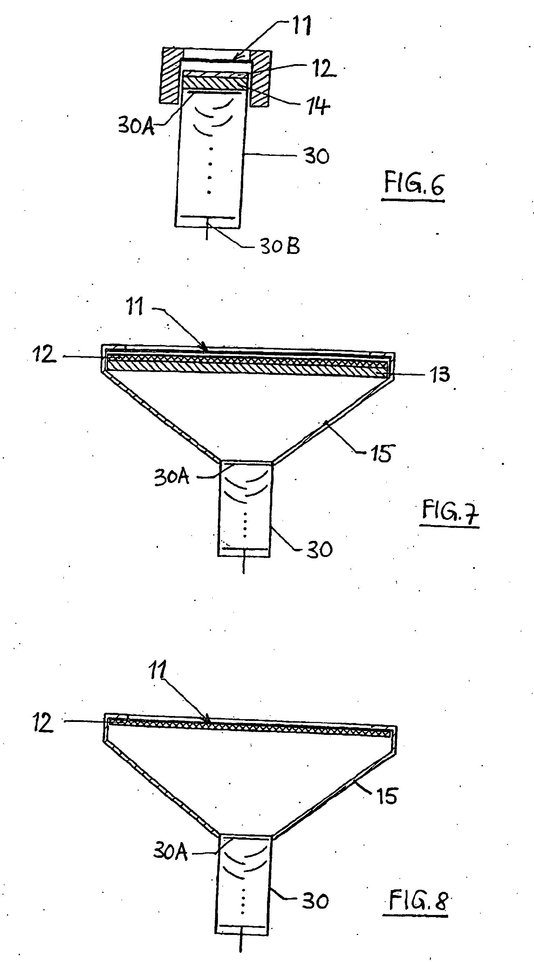

Einem Photovervielfacher 30 ist ein Szintillator 10 als Bestandteil eines Detektors zugeordnet, dessen erfindungsgemäßer Aufbau im einzelnen anhand von Ausführungsbeispielen unter den Figuren 6-11 näher beschrieben wird. Die im Szintillator 10 aufgrund der eingangs beschriebenen Wechselwirkungen erzeugten Photonen werden im nachgeschalteten Photovervielfacher 30 registriert, verstärkt, und die Ausgangsimpulse des Photovervielfachers 30 werden einem schnellen Einzelphotonenverstärker 22 mit Diskriminatorstufe zugeführt,

Diese in Figur 1 gestrichelt umrandete Anordnung aus Photovervielfacher 30 und Einzelphotonenverstärker 22 wird im folgenden als Einzelphotonenzähler 40 bezeichnet.

Dem Einzelphotonenzähler 40 ist eine Auswerteschaltung 20 nachgeschaltet, die in verschiedener Weise ausgestaltet sein kann, wie dies im folgenden erläutert wird.

Die Auswerteschaltung dient zur Lieferung von Zählimpulsen aufgrund eines seiner Art nach identifizierten ionisierenden Strahlungsereignisses an eine Mikroprozessoreinheit 24. Die Bewertung und Umsetzung der normierten Ausgangsimpulse des Einzelphotonenzählers 40 in solche Zählimpulse für die Mikroprozessoreinheit ist somit Aufgabe der Auswerteschaltung 20.

Zur Hochspannungsversorgung des Photovervielfachers 30 dient eine Versorgungseinheit 21, die auch von der Mikroprozessoreinheit 24 angesteuert wird.

Aus der Photokathode werden durch auftreffende Photonen entsprechend der Quantenausbeute einzelne Photoelektronen aufgelöst. Diese werden in der Dynodenkette vervielfacht und erzeugen an der Anode sehr schnelle Ausgangssignale mit einer Breite von typisch 10 ns, wie in Fig. 2C dargestellt.

Obwohl jedes Signal von einem einzelnen Photoelektron herrührt, stellt sich die Impulshöhenvertellung (Fig. 2B) wegen der statistischen Natur der Sekundär-Elektronenvervielfachung als ein breiter Peak dar. Außerdern zeigt die Impulshöhenverteilung einen steilen Anstieg bei kleinen Amplituden, der von photoelektrischen Effekten aus Dynoden, elektronischem Rauschen, etc. herrührt.

Einen stabilen Arbeitspunkt bekommt man, wenn die Diskriminatorschwelle im "Tal" zwischen den beiden Bereichen auf die mit DS bezeichnete Position eingestellt wird. Verändert man nun die Hochspannung, so erhält man am Ausgang des Diskriminators die in Fig. 2A dargestellte Funktion der Impulsrate. Sie zeigt ein sog. Plateau, d. h. einen Bereich bei dem sich die Zählrate als Funktion der Hochspannung nur geringfügig ändert.

Die Hochspannung wird so eingestellt, dass sie im Plateau liegt (Arbeitspunkt AP). Dadurch wirken sich Drifts der Dynodenverstärkung, der Hochspannung, der elektronischen Verstärkung, etc. nur wenig auf das Ergebnis aus. Daher zeichnen sich Einzelphotonenzähler neben höchster Empfindlichkeit durch hervorragende Langzeitstabilität aus.

Es muss noch erwähnt werden, dass Elektronen nicht nur durch Photonen, sondern auch spontan aus der Photokathode aufgelöst werden und damit einen unerwünschten Nulleffekt, der stark temperaturabhängig ist, auslösten. Die Ausschaltung dieser Störung wird ebenfalls durch die Erfindung erreicht.

Mittels eines Displays 24A wird das Auswerteergebnis visualisiert.

In einer einfachen Ausführung arbeitet die Auswerteschaltung als Zählratenuntersetzer. Da bei einem einzigen radioaktiven Ereignis in der Regel mehrere Einzelphotonen erzeugt werden, die vom Einzelphotonenzähler 40 registriert werden, wird in der Auswerteschaltung 20 eine geeignete Zählratenuntersetzung festgelegt (z.B. 20), um beispielsweise jeweils 20 Ausgangsimpulsen (Burst) des Einzelphotonenzählers 40 einen Zählratenimpuls repräsentativ für ein ionisierendes Ereignis zuordnen zu können. Eine Erkennung einer bestimmten Strahlungsart ist hiermit nicht beabsichtigt.

Figur 2B zeigt ein typisches Impulshöhenspektrum eines für Einzeiphotonenzählung geeigneten Photovervielfachers 30.

Der Anstieg bei geringen Amplituden rührt von thermischen Elektronen aus Dynoden und elektrischem Rauschen her, das nachfolgende Maximum bei höheren Amplituden in dieser Impulshöhenverteilung entspricht Einzelelektronen aus der Photokathode, die durch Lichtquanten ausgelöste Photoelektronen oder thermische Elektronen aus der Photokathode sein können.

Die Diskriminatorschwelle DS wird in das Minimum zwischen Einzelelektronen-maximum und Rauschen gelegt, um damit das oben erwähnte Einzelphotonen-Plateau EP (Figur 2A) zu erhalten.

Figur 2C zeigt einen typischen Einzelphotonenpuls mit einer Halbwertbreite von etwa 10 ns.

Im Folgenden werden nun erfindungsgernäße Ausgestaltungen der Vorrichtung zur Umsetzung des erfindungsgemäßen Verfahrens beschrieben, die im wesentlichen eine Weiterentwicklung und Ergänzung der Auswerteschaltung 20 darstellen.

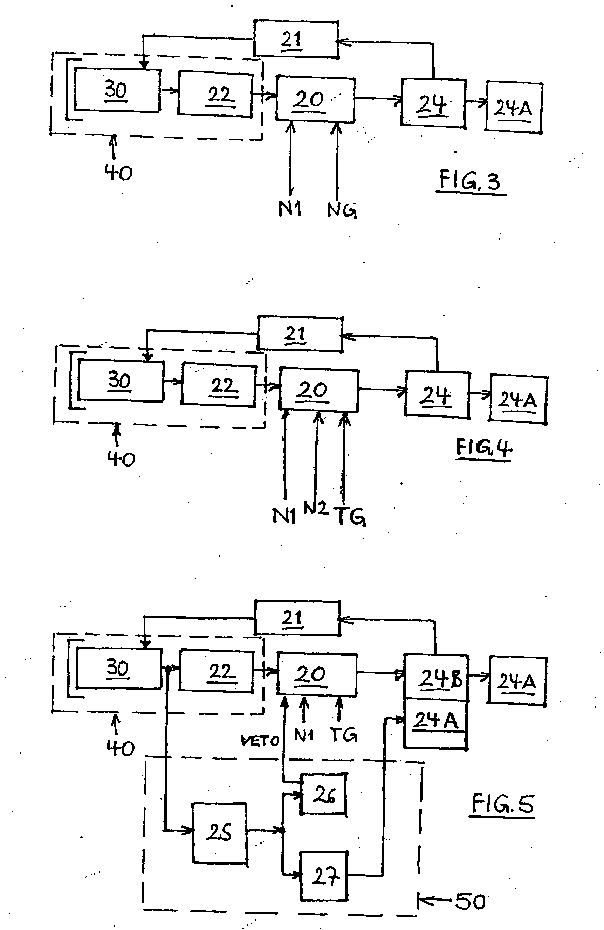

Beim erfindungsgemäßen Ausfuhrungsbeispiet der Vorrichtung gemäß Figur 3 beinhaltet die Auswerteschaltung 20 eine Korreladonsschaltung, mit der die eingangs erläuterte Bursterkennung mit einstellbarer Gatedauer TG und vorwählbarer Pulsanzahl N1 durchgeführt werden kann.

Die Funktionsweise dieser Schaltung ist derart, dass das erste diskriminierte Ausgangssignal (Normimpuls) des Einzelphotonenzählers 40 einen Gateimpuls für eine bestimmte Zeigt TG (Gatedauer) öffnet, vorzugsweise 2-30 µs.

Die innerhalb der Gatedauer TG eintreffenden Normimpulse werden gezählt. Ist die Anzahl N der eingetroffenen Normimpulse mindestens gleich der vorgegebenen Impulsanzahl N1, so wird dies als Nachweis eines für den Wert N1 typischen ionisierenden Ereignisses gewertet, d.h., dann wird von der Korrelationsschaltung ein Zählimpuls an die Mikroprozessorelektronik 24 geleitet.

Diese Variante eignet sich besonders zur Messung eines durch die Wahl von TG und N1 hinsichtlich seiner Art vorgebbaren ionisierenden Ereignisses, also entweder von Alphastrahlung oder Beta/Gamma/Röntgen-Strahlung. Die Zahl der der Mikroprozessoreinheit 24 zugeleiteten Zählimpulse der Auswerteschaltung 20 repräsentiert folglich die Intensität dieser ausgewählten Strahlung.

Die Schaltung kann insofern dynamisch gestaltet werden, als dass bereits bei Erreichen der vorgegebenen Anzahl N1 (N = N1) das Gatefenster geschlossen wird (T < TG) und die Bursterkennung somit wieder zur Registrierung eines neuen ionisierenden Ereignisses bereit ist.

Figur 4 zeigt ein erstes Blockschaltbild einer Vorrichtung, bei dem die Auswerteschaltung 20 derart ausgestaltet ist, dass auch gleichzeitig (d.h. parallel) Beta-Gamma-Röntgenstrahlung einerseits und Alphateilchen andererseits ausschließlich durch eine Bursterkennung gemessen werden können, und zwar dergestalt, dass die Impulsanzahl N1, die zur Bewertung eines ionisierenden Ereignisses als Betateilchen "erforderlich" ist, beispielsweise zwischen 1 und 20 gewählt wird und eine zweite Impulsanzahl N2 beispielsweise zwischen 5 und 50 zur Bewertung eines ionisierenden Ereignisses als Alphateilchen vorgegeben wird, wobei N2 größer als N1 gewählt sein muss.

Bei der Wertung der in das vorgegebene Gatefenster mit der Gatebreite TG gefallenen N Impulse in der Auswerteschaltung 20 sind bei diesem Konzept drei zu unterscheidende Fälle möglich:
a) N < N1 (< N2):
   Das registrierte Ereignis ist weder als Alpha, noch als Beta/Gamma/Röntgenstrahlung zu werten.
b) N1 ≤ N < N2:
   Es handelt sich um ein Beta/Gamma/Röntgensignal.
c) N2 ≤ N:
   Es handelt sich um ein Alphasignal.

Die Auswerteschaltung 20 und der Alphakanal 50 sind bei dieser Ausgestaltung dahingehend konzipiert, dass sie die getrennte Erfassung derartiger Strahlungsereignisse ermöglichen und bei Erfüllen der Bedingung b) oder c) einen separaten "Alphazähler" 24A bzw. "Betazähler" 24B in der Mikroprozessorauswerteeinheit 24 ansteuern.

In Figur 5 ist ein zweites Blockschaltbild einer Vorrichtung dargestellt, deren wesentliche Ausgestaltung darin besteht, dass die Bursterkennung in der Auswerteschaltung 20 ausschließlich zum Nachweis von Betateilchen dient, wogegen parallel ein "Alphakanal" 50 in herkömmlicher Schaltungsweise ausschließlich zum Alphanachweis betrieben wird. Für letzteren sind ein ladungsempfindlicher Vorverstärker 25 mit einer nachfolgenden Pulsformung von ca. 1-20 µs und zwei Integraldiskriminatoren 26 und 27 vorgesehen. Der Vorverstärker erhält das Ausgangssignal des Photovervielfachers 30, der bei dieser Variante insofern eine Doppelfunktion hat, nämlich als Signallieferant für den Alphakanal und als Teil des Einzelphotonenzählers zur Ansteuerung der Auswerteschaltung 20, die hier mit einem schnellen Impulsverstärker 28 mit einer Doppelpulsauflösung von 30 bis 40 ns mit einem schnellen Integralkomparator ausgelegt ist.

Mit dieser Anordnung ist es somit ebenfalls möglich, Betaimpulse und Alphateilchen separat durch Auswahl der Auswertungsmethode (Bursterkennung oder konventioneller Alphakanal), oder aber auch gleichzeitig/parallel zu messen (Bursterkennung und Alphakanal), da die Ausgangsimpulse des Photomultipliers 30 sowohl zur Bursterkennung als auch im Alphakanal 50 ausgewertet werden.

Hierbei ist zu beachten, dass aufgrund der sehr intensiven Wechselwirkung von Alphaimpulsen oder Impulsen aus der Höhenstrahlung mit dem Szintillator große Lichtblitze und somit ein erhebliches Nachleuchten (Phosphoreszenz) und damit Einzelphotonensignale erzeugt werden, die ohne eine zusätzliche Maßnahme (auch) von der Bursterkennung als ionisierende Ereignisse erfasst würden.

Um dies zu verhindern, wird bei Registrierung von Alphaimpulsen oder Impulsen aus der Höhenstrahlung eine gleichzeitige Bursterkennung für eine bestimmte Zeitdauer, beispielsweise 1 bis 10 µs, deaktiviert.

Dies wird dadurch erreicht, dass die Öffnung des Gates zur Bursterkennung während der Dauer des Alphateilchen-Nachweises unterbunden wird ("VetoSignal").

Vorteilhafterweise sind für die diese Betriebsweise zwei Diskriminatorschwellen D1 zur Blockierung der Bursterkennung durch das Vetosignal und D2 zum Beginn der Auswertung im Alphakanal D2 vorgesehen, wobei D2 größer als D1 gewählt ist, so dass bereits bei erkennbarem Beginn eines Alphateilchennachweises (Erreichen der ersten Diskriminatorschwelle D1) durch das Vetosignal ein Gateimpuls für den Start der Bursterkennung unterbunden wird, die Zählung der Ausgangsimpulse für die "Alpha"-Wertung aber erst bei Überschreiten der zweiten Diskriminatorschwelle D2 beginnt.

Während die erläuterten Figuren 1 bis 5 die erfindungsgemäße Auswertung der Ausgangsimpulse des Photovervielfachers 30 zum Gegenstand haben, beschäftigen sich die folgenden Figuren 6 bis 11 mit der Erzeugung der vom ionisierenden Ereignis hervorgerufenen Lichtblitze im Szintillator und der Einkopplung in das Eintrittsfenster des Photovervielfachers.

In allen Fällen wird erfindungsgemäß als strahlungsempfindlicher Detektor eine transparente Szintillatorschicht 12 mit einer Abklingzeitkomponente von mindestens 100 ns eingesetzt, vorzugsweise ZnS und als dünne Schicht auf einer lichtundurchlässigen und sehr dünnen metallisierten Kunststofffolie oder einer lichttransparenten Trägerplatte vorzugsweise aus Plexiglas oder Glas aufgebracht. Aufgrund dieses wesentlichen Merkmals der Erfindung wird kein weiterer Plastikszintillator mehr benötigt.

Die Schichtdicke des Szintillatormaterials 12 wird so gewählt, dass die Alphateilchen aller interessierenden Radionuklide gestoppt werden (Massenbelegung größer als 6 mg/cm²) und die Selbstabsorption des Lichtes im Szintillatormaterial noch vernachlässigt werden kann (Massenbelegung unter 100 mg/cm²).

### Das einfachste Ausführungsbeispiel zeigt Abbildung 6:

Auf einem dünnen Lichtleiter 14, der mit der Photokathode 30B des Photovervielfachers 30 verbunden ist, ist die Szintillatorschicht 12 aufgebracht. Die gesamte Anordnung wird mechanisch und mit einer sehr dünnen Folie 11 als Eintrittsfenster für die Strahlung lichtdicht verschlossen. Das nach einem ionisierenden Ereignis auftretende elektrische Ausgangssignal wird von der Anode 30B ausgekoppelt, und, wie oben beschrieben, dem Einzelphotonenverstärker 22 und ggf. dem Alphakanal 20A zugeführt.

Alternativ hierzu (Figur 7) kann die Sammlung der Lichtimpulse der Szintillatorschicht 12 auch über einen Reflektor 15 durchgeführt werden, der das Licht auf die Anode 30A des Photovervielfachers 30 mit ebener oder sphärischer Photokathode bündelt. Trägerplatte 13 und Szintillatorschicht 12 befinden sich auch hier unterhalb einer lichtdichten Folie 11.

Beim Ausführungsbeispiel nach der Figur 8 ist die Szintillatorschicht 12 direkt auf der dem Photovervielfacher 30 zugewandten Seite der lichtdichten Folie 11 aufgebracht; hier wird keine lichtdurchlässige Trägerplatte mehr benötigt.

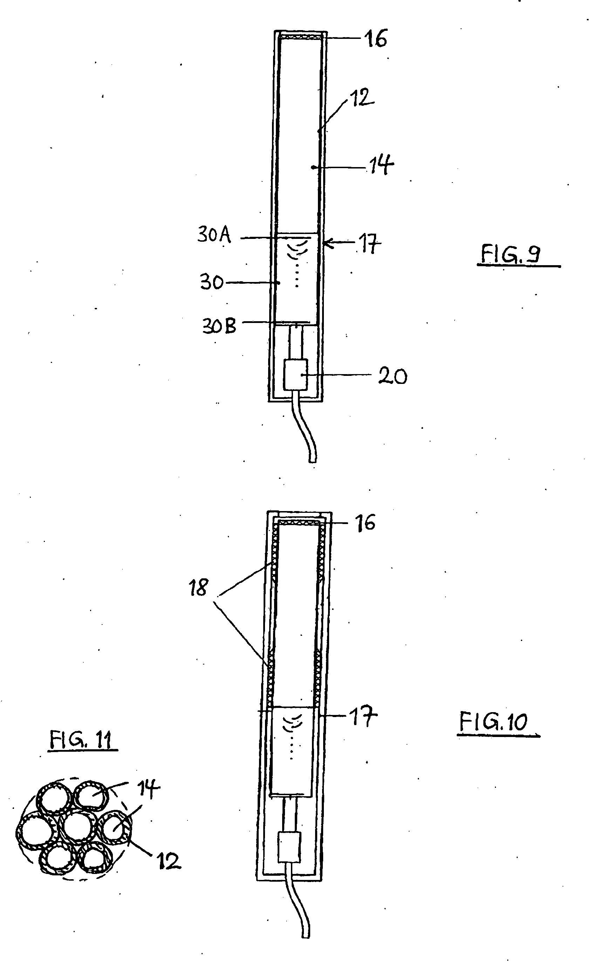

Figur 9 zeigt die Ausgestaltung des Szintillators als Stabdetektor, bei dem auf die Außenwand eines zylindrisch geformten Lichtleiters 14 die Szintillatorschicht 12 aufgebracht wird, die eine Stirnseite mit dem Photovervielfacher 30 und die andere Stirnseite mit einem Spiegel 16 verbunden wird. Die gesamte Anordnung wird zusammen mit einer der eingangs erläuterten Vorrichtungen lichtdicht in ein Rohr 17 mit dünner Wandung eingebaut.

Eine ähnliche Anordnung zeigt die Abbildung 10, wobei dieser Detektor als Dosimeter für Gammastrahlung ausgelegt ist. Um die Dosisleistung energieunabhängig messen zu können, ist ein zusätzliches Energiefilter 18 um den Detektor herum angebracht. Hier ist das lichtdichte Rohr 17 sehr dünn gewählt, damit auch die Dosisleistung von kleinen Gammaenergien noch gemessen werden kann.

Anstelle eines Stabes können auch dünne optische Lichtleiter mit einer Szintillatorschicht 12 beschichtet und ggf. gebündelt werden, wodurch eine besonders hohe Empfindlichkeit erreicht wird. Figur 11 zeigt eine derartige Ausführung im Querschnitt.

Ist die Fläche des Szintillators wesentlich grösser als die Kathodenfläche des im Einzelphotonenzähler verwendeten Photomultipliers,so kann die Verwendung mehrerer Einzelphotonenzähler vorteilhaft sein. Damit erreicht man eine höhere Empfindlichkeit und, bei geeigneter Positionierung der Einzelphotonenzähler, eine besserer Homogenität der Ortsempfindlichkeit. Für die Weiterverarbeitung der Ausgangsimpulse der Einzelphotonenzähler gibt es verschiedene Möglichkeiten. So kann jeder der Einzelphotonenzähler mit einer eigenen Auswerteschaltung versehen sein. Es ist aber auch vorteilhaft, mit nur einer Auswerteschaltung zu arbeiten, wobei die Ausgangsimpulse der einzelnen Einzelphotonenzähler parallel auf die Eingangsstufe der Auswerteschaltung geschaltet werden.

Im letzteren Fall wird das oben beschriebene Gate durch einen von einem der Einzelphotonenzähler kommenden Impuls geöffnet und die während der Öffnungszeit eintreffenden Impulse sämtlicher Einzelphotonenzähler werden gezählt.

### Liste der Bezugszeichen

- 10: Szintillator
- 12: Szintillatorschicht
- 13: Trägerplatte
- 14: Lichtleiter
- 11: Folie
- 15: Reflektor
- 16: Spiegel
- 17: Rohr
- 18: Energiefilter
- 20: Auswerteschaltung
- 21: Versorgungseinheit
- 22: Verstärker mit Diskriminator
- 24: Mikroprozessoreinheit
- 25: Vorverstärker
- 26,27: Integraldiskriminatoren
- 28: Impulsverstärker
- 30: Photovervielfacher
- 30A: Photokathode
- 30B: Anode
- 40: Einzelphotonenzähler
- 50: Alphakanal

## Patentansprüche

1. Verfahren zum Nachweis ionisierender Strahlung umfassend:
- Aussetzen eines Szintillators einer ionisierenden Strahlung, wobei der Szintillator ein Feststoff-Szintillator ist, der mindestens eine Abklingzeitkomponente von Ober 100 ns aufweist,
- Messen der vom Szintillator emittierten Photonen mittels eines Photovervielfachers, wobei der Photovervielfacher ein schneller Einzelphotonenzähler (40) ist,
- Auswerten der Ausgangsimpulse des Einzelphotonenzählers mittels einer eine Korrelationsschaltung aufweisenden Auswerteschaltung, wobei
- die Korrelationsschaltung an den Ausgangsimpulsen des Einzelphotonenzählers (40) eine Korrelationsmessung durchführt aus deren Ergebnis Zählimpulse als Maß für die Intensität der ionisierenden Strahlung gewonnen werden, wobei von der Korrelationsschaltung eine Gateschaltung verwendet wird, wobei ein eintreffender Impuls das Gate für eine bestimmte Zeit (TG) öffnet und ein Zählimpuls als Maß für ein ionisierendes Ereignis erzeugt wird, sobald während der Öffnungszeit des Gates eine bestimmte Zahl (N) weiterer Impulse vom Einzelphotonenzähler registriert werden, so dass eine Bursterkennung durchgeführt wird, und wobei
- parallel zur Bursterkennung in einem Alphakanal (50) eine unabhängige Messung von Alpha-Strahlung mittels Impulsformung der Ausgangssignale des Photovervielfachers (30) erfolgt.

2. Verfahren nach Anspruch 1, **dadurch gekennzeichnet, dass** zur Unterscheidung oder Auswahl einer bestimmten Art, Alpha, Beta, Gamma- oder Röntgen, der ionisierenden Strahlung Werte von N und TG gewählt werden, die für eine bestimmte Art der Strahlung charakteristisch sind.

3. Verfahren nach Anspruch 1 und 2, **dadurch gekennzeichnet, dass** zur Unterscheidung von mindestens zwei gleichzeitig erfassten Arten einer ionisierenden Strahlung zwei für die Art der Strahlung typische Vorgabewerte der Anzahl (N1,N2) gewählt werden, und dass zur Zuordnung zur gemessenen Strahlungsart ein Zählratenimpuls zur Registrierung derjenigen Strahlungsart erzeugt wird, deren Anzahl (N) Ausgangsimpuls innerhalb des Zeitfensters (TG) in vorgebbarer Relation zu beiden Vorgabewerten (N1,N2) liegt.

4. Verfahren nach Anspruch 2 oder 3, **dadurch gekennzeichnet, dass** zur Zuordnung des Zählratenimpulses zu Beta-, Gamma- oder Röntgenstrahlung die vorgebbare Anzahl (N1) zwischen 1 und 20 gewählt ist.

5. Verfahren nach einem der vorangehenden Ansprüche, **dadurch gekennzeichnet, dass** bei Nachweis eines Alphateilchens im Alphakanal (50) der Beginn einer Bursterkennung für eine vorgebbare Veto-Zeit unterbunden wird.

6. Verfahren nach Anspruch 5, **dadurch gekennzeichnet, dass** die Veto-Zeit zwischen 1 und 10 ms liegt.

7. Verfahren nach Anspruch 1, **dadurch gekennzeichnet, dass** die Dauer (TG) des Zeitfensters zwischen 1 und 20µs liegt.

8. Verfahren nach Anspruch 1 und 5, **dadurch gekennzeichnet, dass** zur Wertung der Ausgangsimpulse des Photomultipliers (30) als Alphateilchen im Alphakanal (50) eine erste Amplitudenschwelle (D1) gesetzt ist.

9. Verfahren nach Anspruch 8, **dadurch gekennzeichnet, dass** unterhalb der ersten Amplitudenschwelle (D1) eine zweite Amplituderischwelle (D2) zu Beginn der Zählung im Alphakanal (50) gesetzt ist, so dass die Blockierung der Bursterkennung vor der Aktivierung des Alphakanals (50) erfolgt.

10. Verfahren nach Anspruch 1, **dadurch gekennzeichnet, dass** als Szintillator Zinksulfid (ZnS) verwendet wird.

11. Verfahren nach Anspruch 1, **gekennzeichnet durch** seine Anwendung zur Oberflächen-Kontaminationsmessung.

12. Verfahren nach Anspruch 1, **gekennzeichnet durch** seine Anwendung zum Strahlenschutz, insbesondere zur Dosimetrie, und Messung niederenergetischer Röntgenstrahlung.

## Claims

1. Method for detection of ionizing radiation, comprising :
- exposing a scintillator to an ionizing radiation, wherein the scintillator is a solid scintillator which has at least a decay time of over 100 ns,
- measuring the photons emitted by the scintillator using a photomultiplier, wherein the photomultiplier is a rapid single photon counter (40),
- analysing the output pulses of the single photon counter by means of an analysis circuit having a correlation circuit, wherein
- the correlation circuit carries out a correlation measurement on the output pulses of the single photon counter (40), the result of which gives count pulses as a measure of the intensity of the ionizing radiation, wherein a gate circuit is used in the correlation circuit, wherein an incoming pulse opens the gate for a specific time (TG) and a count pulse is generated as a measure of an ionizing event as soon as, during the opening time of the gate, a specific number (N) of further pulses from the single photon counter are registered so that a burst detection is performed, and wherein
- in parallel to the burst detection, an independent measurement of alpha radiation is carried out in an alpha channel (50) by means of pulse formation of the output signals from the photomultiplier (30).

2. Method according to claim 1, **characterized in that** to distinguish or select a specific type - alpha, beta, or gamma or X-ray - of the ionizing radiation, values are selected for N and TG which are characteristic of a specific type of radiation.

3. Method according to claim 1 and 2, **characterized in that** to distinguish at least two types of an ionizing radiation detected simultaneously, two predefined values for the number (N1, N2) typical of the type of radiation are selected, and that for allocation to a measured radiation type, a count rate pulse for registration of that radiation type is generated, for which the number (N) of output pulses in the time window (TG) lies within a predefinable relationship to both predefined values (N1,N2).

4. Method according to claim 2 or 3, **characterized in that** for assigning the count rate pulse to beta, gamma or X-ray radiation, the predefinable number (N1) is selected between 1 and 20.

5. Method according to any of the preceding claims, **characterized in that** on detection of an alpha particle in the alpha channel (50), the start of a burst detection is suppressed for a predefinable veto time.

6. Method according to claim 5, **characterized in that** the veto time lies between 1 and 10 ms.

7. Method according to claim 1, **characterized in that** the duration (TG) of the time window lies between 1 and 20 µs.

8. Method according to claim 1 and 5, **characterized in that** to evaluate the output pulses from the photomultiplier (30) as an alpha particle, a first amplitude threshold (D1) is set in the alpha channel (50).

9. Method according to claim 8, **characterized in that** below the first amplitude threshold (D1), a second amplitude threshold (D2) is set for the start of counting in the alpha channel (50), so that burst detection is blocked before activation of the alpha channel (50).

10. Method according to claim 1, **characterized in that** zinc sulphide (ZnS) is used as a scintillator.

11. Method according to claim 1, **characterized by** its use for surface contamination measurement.

12. Method according to claim 1, **characterized by** its use for radiation protection, in particular for dosimetry and measurement of low energy X-ray radiation.

## Revendications

1. Procédé de détection de rayonnement ionisant comprenant:
- exposer un scintillateur à un rayonnement ionisant, le scintillateur étant un scintillateur de matière solide, qui présente au moins une composante de temps de décroissance supérieure à 100 ns,
- mesurer les photons émis par le scintillateur au moyen d'un photomultiplicateur, le photomultiplicateur étant un compteur de photons individuels (40) rapide,
- évaluer les impulsions de sortie du compteur de photons individuels au moyen d'un circuit d'évaluation présentant un circuit de corrélation, procédé dans lequel
- le circuit de corrélation effectue une mesure de corrélation sur les impulsions de sortie du compteur de photons individuels (40), dont le résultat permet d'obtenir des impulsions de comptage en tant que mesure pour l'intensité du rayonnement ionisant, le circuit de corrélation utilise un circuit de porte, une impulsion d'entrée ouvre la porte pendant un temps (TG) déterminé et une impulsion de comptage est générée en tant que mesure pour un événement ionisant, dès qu'un nombre (N) déterminé d'impulsions supplémentaires sont enregistrées par le compteur de photons individuels pendant le temps d'ouverture de la porte, de telle sorte qu'une reconnaissance de salve est effectuée, et
- parallèlement à la reconnaissance de salve, une mesure indépendante de rayonnement alpha est effectuée dans un canal alpha (50) au moyen d'une conformation d'impulsion des signaux de sortie du photomultiplicateur (30).

2. Procédé selon la revendication 1, **caractérisé en ce que** pour distinguer ou sélectionner un type déterminé (alpha, bêta, gamma ou rayons X) de rayonnement ionisant on choisit des valeurs de N et TG, qui sont caractéristiques pour un type déterminé de rayonnement.

3. Procédé selon la revendication 1 ou 2, **caractérisé en ce que** pour distinguer au moins deux types de rayonnement ionisant détectés en même temps, on choisit deux valeurs prédéfinies du nombre (N1, N2) qui sont typiques du type de rayonnement, et **en ce que** pour l'affectation au type de rayonnement mesuré, on génère une impulsion de taux de comptage pour l'enregistrement du type de rayonnement, dont le nombre (N) d'impulsions de sortie dans la fenêtre de temps (TG) se situe dans une relation prédéfinissable avec les deux valeurs prédéfinies (N1, N2).

4. Procédé selon la revendication 2 ou 3, **caractérisé en ce que** pour l'affectation de l'impulsion de taux de comptage à un rayonnement bêta, gamma ou X, le nombre prédéfini (N1) est choisi entre 1 et 20.

5. Procédé selon l'une quelconque des revendications précédentes, **caractérisé en ce qu'**en cas de détection d'une particule alpha dans le canal alpha (50) le début d'une reconnaissance de salve est empêché pour un temps de veto prédéfinissable.

6. Procédé selon la revendication 5, **caractérisé en ce que** le temps de veto est compris entre 1 et 10 ms.

7. Procédé selon la revendication 1, **caractérisé en ce que** la durée (TG) de la fenêtre de temps est comprise entre 1 et 20µs.

8. Procédé selon la revendication 1 et 5, **caractérisé en ce que** pour l'évaluation des impulsions de sortie du photomultiplicateur (30) sous forme de particules alpha dans le canal alpha (50), on définit un premier seuil d'amplitude (D1).

9. Procédé selon la revendication 8, **caractérisé en ce qu'**au début du comptage dans le canal alpha (50) on définit au-dessous du premier seuil d'amplitude (D1) un deuxième seuil d'amplitude (D2) de sorte que le blocage de la reconnaissance de salve s'effectue avant l'activation du canal alpha (50).

10. Procédé selon la revendication 1, **caractérisé en ce qu'**on utilise du sulfure de zinc (ZnS) en tant que scintillateur.

11. Procédé selon la revendication 1, **caractérisé par** son application pour la mesure de la contamination de surface.

12. Procédé selon la revendication 1, **caractérisé par** son application à la protection contre les radiations, en particulier pour la dosimétrie et à la mesure des rayons X de faible énergie.
